# FASCICULE DE BREVET EUROPEEN

(11) **EP 1 953 095 B1**
(45) Date de publication et mention de la délivrance du brevet: **25.10.2017**
(21) Numéro de dépôt: 08100920.1
(22) Date de dépôt: 25.01.2008
(51) Int. Cl.: B65F 1/10, B65F 1/14

(54) **Dispositif de remplissage d'au moins deux bacs de collecte de déchets**
Füllvorrichtung für mindestens zwei Abfallsammelbehälter
Device for filling at least two waste collection vats

(30) Priorité: 25.01.2007 FR 0752888
(43) Date de publication de la demande: 06.08.2008
(73) Titulaire: Compagnie Plastic Omnium, 69007 Lyon (FR)
(72) Inventeur: Serrault, Jean-Pierre, 92700 COLOMBES (FR); Bourquard, Yves, 75017 PARIS (FR)
(74) Mandataire: Potdevin, Emmanuel Eric

(56) Documents cités:
- EP-A- 1 484 264
- FR-A- 2 691 492
- FR-A- 2 699 837

## Description

La présente invention concerne le domaine technique des dispositifs de collecte de déchets.

On connaît dans l'état de la technique un dispositif de collecte de déchets comprenant au moins deux bacs et une ouverture de remplissage par laquelle les utilisateurs peuvent déposer leurs déchets dans les bacs. Dans ce dispositif de collecte, des moyens d'entraînement des bacs, commandés par des moyens de détection du taux de remplissage d'un bac, permettent de déplacer les bacs pour amener l'un d'eux en regard de l'ouverture de remplissage.

Ainsi, lorsque les moyens de détection détectent que le taux de remplissage du bac associé à cet instant au dispositif de remplissage dépasse une valeur de seuil prédéterminée, ils commandent les moyens d'entraînement des bacs, qui entraînent les bacs en rotation de façon à amener un bac vide en regard de l'ouverture de remplissage.

Toutefois, le temps de déplacement des bacs est long car les charges à déplacer sont élevées. Il n'est donc pas exclu qu'un utilisateur introduise des déchets dans l'ouverture de remplissage durant le déplacement des bacs, alors qu'aucun bac n'est encore arrivé en regard de cette ouverture. Des déchets sont donc susceptibles d'être déposés dans le dispositif de collecte, mais à l'extérieur des bacs, et peuvent de ce fait entraver leur déplacement.

Il est connu, des documents FR 2 691 492 A et FR 2 699 837 A, un dispositif de collecte de déchets apte à être au moins partiellement enterré et comprenant un dispositif de remplissage et au moins deux bacs, le dispositif de remplissage étant agencé pour pouvoir prendre une première configuration dans laquelle il ménage un accès entre au moins un orifice d'introduction des déchets dans le dispositif de collecte et un premier bac, et une deuxième configuration dans laquelle il ménage un accès entre l'orifice d'introduction et un deuxième bac.

L'invention a pour but de remédier aux inconvénients ci-dessus.

A cet effet, l'invention a pour objet un dispositif de collecte de déchets conforme à la revendication 1. Un tel dispositif est caractérisé en ce que l'orifice d'introduction du dispositif de remplissage est mobile, ce qui permet le changement de configuration du dispositif. Cet orifice peut être mobile qu'il soit relié ou non à un conduit.

Par « dispositif de remplissage », on désigne les éléments permettant de ménager un accès depuis un orifice d'introduction des déchets dans le dispositif de collecte jusqu'à un des bacs de ce dispositif de collecte, permettant de stocker les déchets._

Ainsi, un dispositif de collecte selon l'invention, par exemple un conteneur, est de fonctionnement fiable, car d'éventuels déchets déversés à l'extérieur des bacs ne gênent pas le passage d'un bac à l'autre en regard du dispositif de remplissage.

En effet, même si un utilisateur introduit des déchets dans le dispositif de remplissage alors qu'il est en train de changer de configuration et si ces déchets sont déversés à l'extérieur des bacs, cela n'empêche pas le fonctionnement du dispositif. Les bacs étant fixes, le conteneur peut être conçu de sorte que la zone dans laquelle sont susceptibles d'être déversés les déchets ne contienne aucun élément permettant le changement de configuration du dispositif de remplissage.

En outre, le dispositif de remplissage est plus léger que les bacs pleins qui étaient déplacés dans l'état de la technique. Le changement de configuration de ce dispositif peut alors être effectué à l'aide d'éléments allégés, moins puissants et de conception mécanique plus simples, qui, par conséquent, sont plus économiques.

Il est à noter qu'un dispositif de collecte selon l'invention est avantageux, car il ne nécessite qu'un unique dispositif de remplissage pour un grand volume de déchets stockés.

Un dispositif de collecte selon l'invention permet, en supplément de tous les avantages mentionnés ci-dessus, d'avoir un fonctionnement simple. En effet, une fois le dispositif de remplissage et, de ce fait, l'orifice d'introduction placé en regard d'un des bacs, les déchets sont mis en place dans celui-ci, sans qu'il soit nécessaire d'effectuer aucun mouvement dans le dispositif de collecte.

Il est avantageux que les bacs soient agencés dans le dispositif de collecte pour être fixes, pour permettre de disposer les déchets facilement dans le bac correspondant.

Par « agencés pour être fixes », on entend que les bacs ne sont pas mobiles lors d'un changement de configuration du système. Il est toutefois possible que les bacs du dispositif de collecte soient constitués par des bacs roulants, que l'opérateur de collecte peut ainsi déplacer facilement lors du vidage du dispositif de collecte.

Le dispositif de collecte selon l'invention peut également comprendre l'une ou plusieurs des caractéristiques suivantes :
- des moyens automatiques d'entraînement d'une partie mobile du dispositif de remplissage sont prévus, ce qui permet de changer la configuration du dispositif sans intervention humaine et sans délai ;
- les moyens automatiques comprennent des moyens de détection du taux de remplissage du bac associé au dispositif de remplissage, de sorte qu'un bac vide puisse être associé au dispositif de remplissage par changement de configuration de ce dernier dès lors que le bac associé à un instant donné au dispositif est plein ou quasi-plein ;
- les moyens automatiques comprennent des moyens d'indication de la nature des déchets à introduire dans les bacs, comportant de préférence un pavé de commande externe. Cela permet de mettre sur la place publique un unique conteneur pour tous types de déchets et donc de limiter encore la place des conteneurs de collecte de déchets au coeur de l'espace public ;
- le dispositif de remplissage comprend un orifice d'introduction des déchets ;
- le dispositif de remplissage comprend un conduit dont une première embouchure est constituée par l'orifice d'introduction et une seconde embouchure destinée à être agencée en regard d'un bac de collecte. Cela permet d'accompagner le parcours des déchets à l'intérieur du conteneur et de connaître avec précision leur point de chute, et également de s'assurer que, dans des conditions normales d'utilisation, les déchets sont bien reçus dans un bac, pour faciliter le vidage du conteneur ;
- le conduit comprend une partie fixe incluant de préférence la première embouchure, à laquelle est raccordée une partie mobile, incluant de préférence la deuxième embouchure, apte à prendre au moins deux positions correspondant aux configurations du dispositif. Ainsi, la partie extérieure du dispositif de remplissage, en interface avec l'utilisateur, est fixe, ce qui permet d'optimiser la sécurité des utilisateurs. En outre, dans ce mode de réalisation, les moyens automatiques d'entraînement peuvent être conçus de sorte qu'ils sont inaccessibles de l'extérieur, ce qui réduit les risques de vandalisme et de dysfonctionnements du dispositif ;
- le dispositif de remplissage est monté au moins partiellement sur une plate-forme mobile, notamment tournante, de préférence disposée essentiellement à hauteur de voie lorsque le dispositif est en position enterrée.
- le dispositif de remplissage comporte des moyens d'identification d'un utilisateur. Un tel système permet par exemple de facturer le service de collecte à chaque utilisateur au plus juste, en fonction des déchets qu'il produit ;
- le dispositif de remplissage comprend des moyens d'obturation de l'orifice d'introduction du dispositif de collecte, de sorte qu'une interdiction d'introduire des déchets dans le conteneur est possible ;
- le dispositif de remplissage comprend des moyens de commande des moyens d'obturation, comportant les moyens de détection et/ou d'identification selon l'invention. Ainsi, de tels moyens permettent de garantir la sécurité des utilisateurs, d'optimiser le tri des déchets et de garantir une facture au plus juste pour chaque utilisateur.

Dans un mode de réalisation particulier, le dispositif de collecte est destiné à être au moins partiellement enterré. Dans ce cas, le gain d'espace sur la voie publique est encore accru.

L'invention sera mieux comprise à la lecture de la description qui va suivre, donnée uniquement à titre d'exemple et faite en se référant aux dessins dans lesquels :
- la figure 1 représente une vue latérale d'une partie d'un dispositif de collecte selon un mode de réalisation non revendiqué ;
- la figure 2 représente une vue détaillée d'une partie du dispositif de collecte de la figure 1,
- la figure 3 représente une vue en coupe verticale d'un dispositif de collecte selon un mode de réalisation de l'invention
- la figure 4 est une vue schématique de dessus du dispositif de collecte de la figure 3,
- la figure 5 représente une vue en coupe verticale d'une variante du dispositif de collecte selon le mode de réalisation des figures 3 et 4,

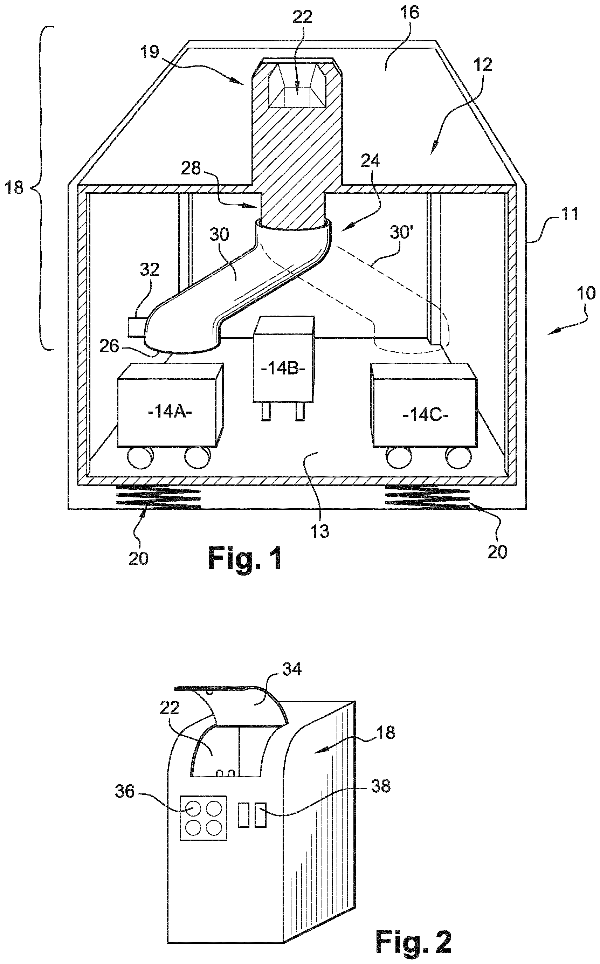

On a représenté sur la figure 1 un dispositif de collecte de déchets non revendiqué, par exemple un conteneur 10 enterré délimité par les parois 11 d'un cuvelage en béton réalisé dans le sol et permettant de garantir l'étanchéité du conteneur 10. Le conteneur 10 comprend une plate-forme 12 munie d'une surface inférieure 13, supportant plusieurs bacs roulants 14, ici trois bacs à quatre roues 14A, 14B, 14C, ayant un gros volume de réception de déchets. La plate-forme comporte également une paroi supérieure 16, délimitant la paroi supérieure du conteneur 10 et située à hauteur de voie, sur laquelle est agencée un dispositif de remplissage 18. La paroi supérieure 16 est amovible et la plate-forme 12 est mobile, la surface inférieure 13 de celle-ci pouvant être élevée à hauteur de voie à l'aide d'un dispositif élévateur 20, ce qui permet d'effectuer le vidage des bacs 14 du conteneur uniquement à l'aide d'un camion adapté au vidage de bacs classiques.

Le dispositif de remplissage 18 comprend une borne de remplissage 19 comportant un orifice d'introduction des déchets 22. Le dispositif de remplissage 18 comprend également un conduit 24, ménagé partiellement dans la borne de remplissage et dont on distingue la partie inférieure sur la figure 1. Ce conduit 24 comprend une première embouchure constituée par l'orifice de remplissage 22 et une deuxième embouchure 26 débouchant à l'intérieur du conteneur 10 et étant agencée en regard d'un bac 14A du conteneur 10, pour permettre le déversement dans ce bac 14A des déchets introduits dans l'orifice 22.

Le conduit 24 comprend une première partie fixe 28, incluant la première embouchure 22, à laquelle est raccordée une partie 30 coudée, mobile en rotation relativement à la partie fixe et incluant la deuxième embouchure 26. La partie mobile 30 du conduit 24 est agencée pour pouvoir prendre une première position, correspondant à une première configuration du dispositif de remplissage, dans laquelle elle ménage un accès vers un premier bac 14A et une deuxième position 30', correspondant à une deuxième configuration du dispositif, dans laquelle elle ménage un accès vers un deuxième bac 14C.

Le dispositif de remplissage 18 comprend également des moyens automatiques d'entraînement (non représentés sur la figure) comprenant par exemple un moteur permettant d'actionner un arbre ou des vérins électriques, pneumatiques ou hydrauliques, reliés à la partie mobile 30 du conduit 24.

Les moyens automatiques comprennent des moyens de détection 32 du taux de remplissage d'un bac. Ces moyens comprennent par exemple un émetteur et un récepteur ultrasoniques reliés à une carte électronique et sont reliés électriquement aux moyens d'entraînement, qu'ils sont aptes à commander. De cette façon, ils activent le changement de configuration de la partie mobile 30 du conduit 24. Ainsi, lorsqu'un premier bac 14A possède un taux de remplissage supérieur à une valeur de seuil prédéterminée, les moyens de détection activent les moyens d'entraînement, qui déplacent la partie mobile 30 du conduit 24 entre une première position, au-dessus du premier bac et une deuxième position 30' dans laquelle la partie mobile est représentée en pointillés, située au-dessus d'un deuxième bac 14C.

Les moyens de détection 32 peuvent aussi être utilisés pour asservir les moyens d'entraînement à la position précise d'un bac à associer au dispositif de remplissage. Les trois bacs 14A, 14B, 14C peuvent en effet être placés approximativement dans le conteneur 10 et le centrage de la partie mobile 30 du conduit 24 au-dessus d'un bac peut être assuré par détection à l'aide des moyens 32.

Comme on le voit sur la figure 2, la borne de remplissage 19 comprend des moyens d'obturation de l'orifice d'introduction 22, comportant un volet 34 pivotant, fixé par exemple en position de fermeture au dispositif de remplissage par encliquetage, et des moyens de verrouillage du volet 34 en position de fermeture (non représenté sur les figures). De tels moyens d'obturation peuvent également comprendre des vérins commandés électriquement permettant le positionnement du volet.

Le dispositif de remplissage 18 comprend également un pavé de commande numérique 36 situé à l'extérieur de la borne de remplissage 19 de façon à être accessible à l'utilisateur. Ce pavé 36 permet notamment d'indiquer la nature des déchets à introduire dans le conteneur. Le dispositif 18 comprend également des moyens d'identification de l'utilisateur, comportant un lecteur de carte magnétique 38.

Les moyens 36 d'indication de la nature des déchets à introduire sont utiles lorsque différents bacs 14A, 14B, 14C stockent des déchets de natures différentes (respectivement verre, papier, métal, par exemple). Ces moyens 36 sont reliés électriquement aux moyens d'entraînement et constituent des moyens automatiques permettant la commande de ces moyens d'entraînement qui positionnent alors la partie mobile 30 du conduit 24 au-dessus du bac stockant les déchets de la nature indiquée par l'utilisateur.

Les moyens d'obturation, notamment les moyens de verrouillage, peuvent également être commandés par les moyens 32 ou 36, ce qui permet d'obturer l'orifice 22 lorsque la partie mobile du conduit est en cours de déplacement, de façon notamment à renforcer la sécurité. De la même façon, cela permet d'obturer l'orifice tant que l'utilisateur n'a pas précisé le type de déchets qu'il souhaitait introduire, pour faciliter le tri. Les moyens d'obturation peuvent également être commandés par les moyens d'identification 38, de sorte que le volet 34 reste verrouillé en position de fermeture tant que l'utilisateur ne s'est pas identifié, afin d'éviter les fraudes.

Les moyens d'obturation 34, d'indication 36 ou d'identification 38 sont optionnels. Le conteneur peut comprendre un nombre quelconque de bacs et peut être semi-enterré ou prendre place dans un local.

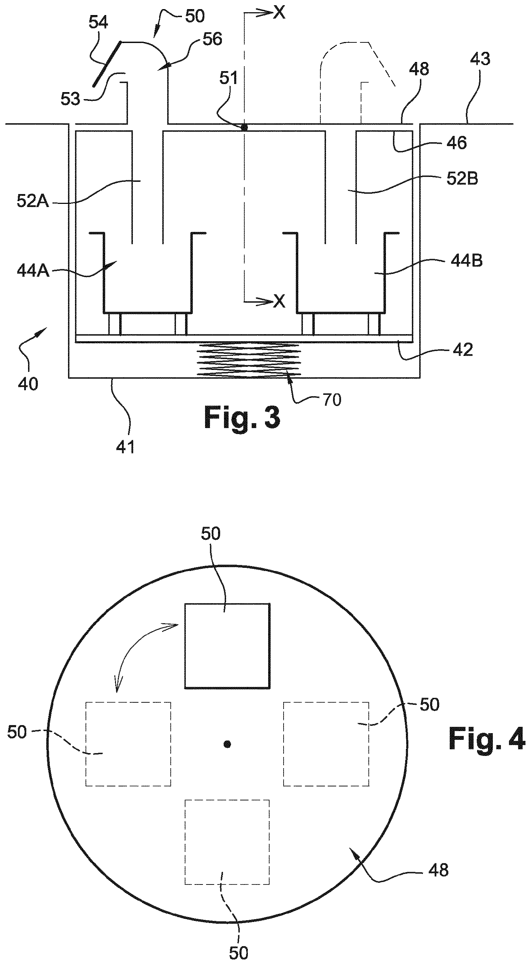

Dans un mode de réalisation de l'invention représenté aux figures 3 et 4, un dispositif de collecte 40 de déchets est délimité par un cuvelage en béton 41 situé sous la voie publique 43, dans lequel est mise en place une structure comportant une plate-forme inférieure 42 supportant quatre bacs roulants, dont deux bacs roulants 44A, 44B sont visibles sur la figure 3. Les bacs sont agencés pour être fixes lorsque le dispositif est en position enterrée. Le dispositif de collecte 40 comprend un dispositif motorisé 70 d'élévation de la structure, de sorte que la plate-forme 42 peut être levée jusqu'à hauteur de voie de façon à pouvoir vider les bacs plus facilement.

La structure comprend également des montants latéraux reliant la plate-forme inférieure 42 à une charpente 46. La charpente 46 supporte une plate-forme supérieure 48 agencée pour être à hauteur de voie lorsque le dispositif est en position enterrée.

La charpente 46 supporte également une pluralité de conduits, dont deux conduits 52A, 52B sont visibles sur la figure 3, chaque conduit se trouvant en face d'un emplacement de la plate-forme inférieure 42 destiné à accueillir un bac roulant. Chaque conduit comprend une première embouchure débouchant au niveau de la charpente 46, sous la plate-forme 48, et une deuxième embouchure débouchant à l'intérieur du dispositif de collecte, en regard d'un des bacs du dispositif de collecte.

La plate-forme supérieure 48 présente une forme de disque et est agencée sur la charpente 46 de façon à être mobile en rotation par rapport à celle-ci autour d'un axe de rotation vertical X passant par le centre 51 de la plate-forme 48. Elle est entraînée en rotation par des moyens motorisés non représentés sur les figures 3 et 4. Elle comprend en outre une borne d'introduction des déchets 50 disposée entre le centre 51 du disque et la périphérie de celui-ci. La borne d'introduction est mobile en rotation avec la plate-forme.

La borne d'introduction 50 comprend un orifice d'introduction des déchets 53 destiné à être obturé par une trappe 54, cette trappe pouvant être verrouillée, et un conduit 56 ayant une première embouchure formant l'orifice d'introduction 53 et une deuxième embouchure débouchant au niveau de la plate-forme 48. La borne d'introduction est disposée sur la plate-forme, de sorte que la deuxième embouchure du conduit 56 de la borne d'introduction puisse être située en face de la première embouchure de chaque conduit 52A et 52B. Les conduits 52A et 52B sont bien sûr pour cela situés à égale distance du centre de la plate-forme supérieure 48. On a représenté sur la figure 4 en traits pleins une première configuration que peut prendre la borne d'introduction, les autres configurations étant représentées en traits pointillés.

Pour régler la position de la plate-forme 48, celle-ci et/ou chaque conduit 52A, 52B peut comprendre un capteur, par exemple un ensemble émetteur/récepteur ultrasonique, permettant de régler au mieux la position angulaire de la plate-forme pour qu'elle soit en face de l'un des conduits 52A, 52B. Le mouvement de la plate-forme 48 peut être commandé, comme cela est décrit dans l'exemple non revendiqué par des moyens d'indication par l'utilisateur du type de déchets à introduire, et/ou par des moyens de détermination du taux de remplissage d'un bac. L'ouverture de la trappe d'obturation 54 peut également être commandée par de tels moyens ou par des moyens d'identification de l'utilisateur.

Ainsi, lorsqu'un utilisateur souhaite introduire des déchets dans le dispositif de collecte, il s'identifie par l'intermédiaire de moyens tels que ceux décrits dans l'exemple non revendiqué, de façon à ouvrir la trappe 54, permettant un accès à l'orifice d'introduction 53 de la borne d'introduction 50. Il peut alors sélectionner le type de déchets à introduire dans le dispositif de collecte, à l'aide par exemple d'un pavé de commande numérique, tel que cela est décrit dans l'exemple non revendiqué. Chacun des quatre bacs de collecte est destiné à stocker un type de déchets particulier. Ainsi, si le type de déchets sélectionné n'est pas destiné à être stocké dans un bac situé en regard de l'orifice d'introduction des déchets, le type de déchets sélectionné déclenche l'entraînement en rotation de la plate-forme 48 autour de l'axe X, jusqu'à ce que la borne d'introduction 50 soit placée en face du conduit 52A, 52B correspondant au bac 44A, 44B dans lequel les déchets doivent être placés.

Il est à noter que la vitesse de déplacement de la plate-forme est peu importante, de sorte qu'un piéton qui monte ou descende sur la plate-forme lorsque celle-ci est en mouvement ne puisse pas se blesser. En outre, l'accès à la plate-forme peut être rendu plus difficile si celle-ci est entourée d'une barrière ou d'un muret évitant à un passant manquant d'attention d'arriver sur la plate-forme sans s'en apercevoir.

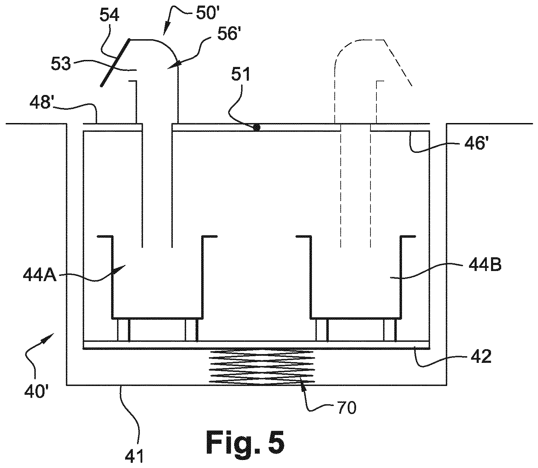

Dans une variante du mode de réalisation des figures 3 et 4, représentée à la figure 5, la charpente 46' du dispositif de collecte 40' ne comprend pas de conduit mais la plate-forme 48' comprend un conduit 56' ayant une première embouchure confondue avec l'orifice d'introduction 53 et une deuxième embouchure débouchant à l'intérieur du dispositif de collecte, de façon à être situé en face de l'un des bacs mis en place dans le dispositif de collecte. Ainsi, le conduit 56' s'étend vers le bas de façon à traverser la charpente 46'. La charpente 46' comprend alors une fente annulaire permettant d'assurer la mobilité du conduit 56'. Deux configurations possibles de la borne d'introduction 50' et du conduit 56' sont représentées respectivement en traits pleins et en traits pointillés sur la figure 5. Dans cette variante, il est à noter que les éléments identique à ceux des figures 3 et 4 sont indiqués par des références identiques.

Le dispositif de remplissage est alors mobile dans sa totalité, c'est-à-dire que le conduit mais également l'orifice d'introduction et la partie externe du dispositif de remplissage sont mobiles.

Dans une variante non représentée, le dispositif est mobile uniquement dans sa partie externe: le dispositif de remplissage comprend alors plusieurs conduits fixes agencés pour ménager un accès vers les bacs respectifs, la partie externe du dispositif comprenant une coque avec un orifice d'introduction, la coque étant mobile de sorte que l'orifice peut prendre différentes configurations, pour être en regard de chaque conduit. En outre, le conduit est optionnel : l'orifice d'introduction placé dans une configuration particulière peut être directement placé au-dessus d'un bac. Ce mode de réalisation est mis en place notamment dans le cas de conteneurs semi-enterrés.

Dans une autre variante non représentée, la borne d'introduction des déchets est centrée sur la plate-forme et est solidaire d'un conduit coudé, comprenant une première partie essentiellement verticale, comportant une première embouchure correspondant à l'orifice d'introduction des déchets. Il comprend également une deuxième partie, séparée de la première partie par le coude et formant un angle non nul relativement à la direction verticale. Cette deuxième partie comprend une deuxième embouchure apte à être située en regard d'un bac de collecte. Le conduit traverse la charpente supportant la plate-forme. Comme le conduit est coudé, la deuxième embouchure du conduit n'est pas située au droit du centre de la plate-forme, par lequel passe également le centre de rotation de celle-ci et est donc mobile en rotation lorsque la plate-forme tourne. Il est avantageux que la première partie du conduit traverse la charpente, car, dans ce cas, à l'endroit où il traverse la plate-forme, le conduit est peu mobile, car il est sensiblement au droit du centre de la plate-forme. Les contraintes liées à la traversée par le conduit de la charpente sont donc moindres et la conception de la charpente est plus libre.

## Revendications

1. Dispositif de collecte de déchets (40) apte à être au moins partiellement enterré et comprenant un dispositif de remplissage (52A, 52B, 53, 56 ; 53, 56') et au moins deux bacs (44A, 44B), le dispositif de remplissage (52A, 52B, 53, 56 ; 53, 56') étant agencé pour pouvoir prendre une première configuration dans laquelle il ménage un accès entre au moins un orifice d'introduction (53) des déchets dans le dispositif de collecte de déchets (40) et un premier bac (44A), et une deuxième configuration dans laquelle il ménage un accès entre l'orifice d'introduction (53) et un deuxième bac (44B), **caractérisé en ce que** l'orifice d'introduction (53) est mobile.

2. Dispositif selon la revendication précédente, dans lequel les bacs (44A, 44B) sont agencés dans le dispositif de collecte de déchets (40) pour être fixes.

3. Dispositif selon l'une quelconque des revendications précédentes, comprenant des moyens automatiques d'entraînement d'une partie mobile du dispositif de remplissage (52A, 52B, 53, 56 ; 53, 56'), la partie mobile du dispositif de remplissage (52A, 52B, 53, 56 ; 53, 56') étant la partie comprenant l'orifice introduction (53).

4. Dispositif selon l'une quelconque des revendications précédentes, comprenant des moyens de détection d'un taux de remplissage d'un des bacs (44A, 44B) associé au dispositif de remplissage (52A, 52B, 53, 56 ; 53, 56').

5. Dispositif selon l'une quelconque des revendications 3 ou 4, comprenant des moyens d'indication de la nature des déchets à introduire dans les bacs (44A, 44B), comportant de préférence un pavé de commande externe.

6. Dispositif selon l'une quelconque des revendications précédentes, dans lequel le dispositif de remplissage (52A, 52B, 53, 56 ; 53, 56') comprend au moins un conduit (52A, 52B, 56 ; 56') dont une première embouchure comprend l'orifice d'introduction (53) et une deuxième embouchure est apte à être agencée en regard d'un des bacs (44A, 44B).

7. Dispositif selon la revendication précédente, dans lequel le conduit (52A, 52B, 56) comprend une partie fixe (52A, 52B) incluant la deuxième embouchure, et une partie mobile (56) raccordée à la partie fixe (52A, 52B) et incluant la première embouchure, le conduit (52A, 52B, 56) étant apte à prendre au moins deux positions correspondant aux configurations respectives du dispositif de remplissage (52A, 52B, 53, 56).

8. Dispositif selon l'une des revendications 1 à 7, dans lequel le dispositif de remplissage (52A, 52B, 53, 56; 53, 56') est monté au moins partiellement sur une plate-forme mobile (48; 48'), notamment tournante, de préférence disposée essentiellement à hauteur de voie lorsque le dispositif de collecte de déchets (40) est en position enterrée.

9. Dispositif selon l'une quelconque des revendications précédentes, comprenant des moyens d'identification d'un utilisateur.

10. Dispositif selon l'une quelconque des revendications précédentes, comprenant des moyens d'obturation (54) de l'orifice d'introduction (53).

11. Dispositif selon la revendication précédente, comprenant des moyens de commande des moyens d'obturation (54), comportant au moins l'un des éléments de la liste ci-dessous :
- les moyens automatiques selon l'une quelconque des revendications 3 à 5,
- les moyens d'identification selon la revendication 9.

## Patentansprüche

1. Vorrichtung zum Sammeln von Abfällen (40), die dazu eingerichtet ist, mindestens teilweise im Erdboden eingelassen zu werden, und eine Füllvorrichtung (52A, 52B, 53, 56; 53, 56') und mindestens zwei Tröge (44A, 44B) umfasst, wobei die Füllvorrichtung (52A, 52B, 53, 56; 53, 56') so vorgesehen ist, dass sie eine erste Ausgestaltung einnehmen kann, in der sie einen Zugang zwischen mindestens einer Öffnung zum Einführen (53) der Abfälle in die Vorrichtung zum Sammeln von Abfällen (40) und einem ersten Trog (44A) bildet, und eine zweite Ausgestaltung einzunehmen, in der sie einen Zugang zwischen der Einführöffnung (53) und einem zweiten Trog (44B) bildet, und **dadurch gekennzeichnet, dass** die Zuführöffnung (53) beweglich ist.

2. Vorrichtung nach dem vorhergehenden Anspruch, wobei die Tröge (44A, 44B) in der Vorrichtung zum Sammeln von Abfällen (40) so vorgesehen sind, dass sie feststehend sind.

3. Vorrichtung nach einem der vorhergehenden Ansprüche, umfassend automatische Mittel für die Mitnahme eines beweglichen Teils der Füllvorrichtung (52A, 52B, 53, 56; 53, 56'), wobei der bewegliche Teil der Füllvorrichtung (52A, 52B, 53, 56; 53, 56') der Teil ist, der die Einführöffnung (53) umfasst.

4. Vorrichtung nach einem der vorhergehenden Ansprüche, umfassend Mittel zum Detektieren eines Füllstands eines der Tröge (44A, 44B), welcher der Füllvorrichtung (52A, 52B, 53, 56; 53, 56') zugeordnet ist.

5. Vorrichtung nach einem der Ansprüche 3 oder 4, umfassend Mittel zum Anzeigen der Beschaffenheit der in die Tröge (44A, 44B) einzuführenden Abfälle, die vorzugsweise einen externen Bedientastenblock aufweisen.

6. Vorrichtung nach einem der vorhergehenden Ansprüche, wobei die Füllvorrichtung (52A, 52B, 53, 56; 53, 56') mindestens eine Rohrleitung (52A, 52B, 56; 56') umfasst, von der eine erste Mündung die Einführöffnung (53) umfasst und eine zweite Mündung dazu eingerichtet ist, einem der Tröge (44A, 44B) gegenüber vorgesehen zu sein.

7. Vorrichtung nach dem vorhergehenden Anspruch, wobei die Rohrleitung (52A, 52B, 56) einen feststehenden Teil (52A, 52B) umfasst, der die zweite Mündung enthält, und einen beweglichen Teil (56) umfasst, der mit dem feststehenden Teil (52A, 52B) verbunden ist und die erste Mündung enthält, wobei die Rohrleitung (52A, 52B, 56) dazu eingerichtet ist, mindestens zwei Positionen einzunehmen, die den jeweiligen Ausgestaltungen der Füllvorrichtung (52A, 52B, 53, 56) entsprechen.

8. Vorrichtung nach einem der Ansprüche 1 bis 7, wobei die Füllvorrichtung (52A, 52B, 53, 56; 53, 56') mindestens teilweise auf einer beweglichen, insbesondere sich drehenden, Plattform (48; 48') montiert ist, die vorzugsweise im Wesentlichen auf Fahrbahnhöhe angeordnet ist, wenn die Vorrichtung zum Sammeln von Abfällen (40) in der im Erdboden eingelassenen Position ist.

9. Vorrichtung nach einem der vorhergehenden Ansprüche, umfassend Mittel zum Identifizieren eines Benutzers.

10. Vorrichtung nach einem der vorhergehenden Ansprüche, umfassend Mittel zum Verschließen (54) der Einführöffnung (53) .

11. Vorrichtung nach dem vorhergehenden Anspruch, umfassend Mittel zum Betätigen der Mittel zum Verschließen (54), die mindestens eines der Elemente der unten stehenden Liste aufweisen:
- die automatischen Mittel nach einem der Ansprüche 3 bis 5,
- die Identifikationsmittel nach Anspruch 9.

## Claims

1. Waste collection device (40) adapted to be at least partially buried and comprising a filling device (52A, 52B, 53, 56; 53, 56') and at least two vats (44A, 44B), the filling device (52A, 52B, 53, 56; 53, 56') being arranged to be able to assume a first configuration in which it forms an access between at least one waste introduction opening (53) in the waste collection device (40) and a first vat (44A), and a second configuration in which it forms an access between the introduction opening (53) and a second vat (44B), **characterised in that** the introduction opening (53) is movable.

2. Device according to the preceding claim, wherein the vats (44A, 44B) are arranged in the waste collection device (40) to be fixed.

3. Device according to any one of the preceding claims, comprising automatic means for driving a movable part of the filling device (52A, 52B, 53, 56; 53, 56'), the movable part of the filling device (52A, 52B, 53, 56; 53, 56') being the part comprising the introduction opening (53).

4. Device according to any one of the preceding claims, comprising means for detecting a filling rate of one of the vats (44A, 44B) associated with the filling device (52A, 52B, 53, 56; 53, 56').

5. Device according to claim 3 or 4, comprising means for indicating the type of waste to be introduced into the vats (44A, 44B), preferably comprising an external control pad.

6. Device according to any one of the preceding claims, wherein the filling device (52A, 52B, 53, 56; 53, 56') comprises at least one duct (52A, 52B, 56; 56') having a first mouth which comprises the introduction opening (53) and a second mouth which is adapted to be arranged opposite one of the vats (44A, 44B).

7. Device according to the preceding claim, wherein the duct (52A, 52B, 56) comprises a fixed part (52A, 52B) including the second mouth, and a movable part (56) connected to the fixed part (52A, 52B) and including the first mouth, the duct (52A, 52B, 56) being adapted to assume at least two positions corresponding to the respective configurations of the filling device (52A, 52B, 53, 56).

8. Device according to one of claims 1 to 7, wherein the filling device (52A, 52B, 53, 56; 53, 56') is mounted at least partially on a movable platform (48; 48'), in particular rotating, preferably arranged substantially at road height when the waste collection device (40) is in buried position.

9. Device according to any of the preceding claims, comprising means for identifying a user.

10. Device according to any one of the preceding claims, comprising means (54) for blocking the introduction opening (53).

11. Device according to the preceding claim, comprising means for controlling the blocking means (54), comprising at least one of the items in the following list:
- the automatic means according to any one of claims 3 to 5,
- the identification means according to claim 9.
